# DEMANDE DE BREVET EUROPEEN

(11) **EP 2 801 592 A1**
(43) Date de publication de la demande: **12.11.2014**
(21) Numéro de dépôt: 14167096.8
(22) Date de dépôt: 06.05.2014
(51) Int. Cl.: C09D 5/14, C09D 5/16, C09D 7/12, C09D 131/04

(54) **Composition pour revetement de surface isolant, antibacterien et anti-moisissure**

(30) Priorité: 07.05.2013 FR 1354192
(71) Demandeur: Sacre, 75003 Paris (FR); Somefyn, 77380 Combs-la-Ville (FR)
(72) Inventeur: Palazzolo, Rocco, 75003 PARIS (FR); Mejladi, Moktar, 45120 CEPOY (FR)
(74) Mandataire: Esselin, Sophie

(57) **Abrégé**

L'invention a pour objet une composition pour revêtement par exemple mural, comprenant un liant et un solvant aqueux caractérisée en ce que :
- ledit liant est un copolymère d'acétate de vinyle éthylène ;
- ladite composition comprenant également au moins l'ensemble des constituants suivants :
- un agent épaississant naturel à base de cellulose ;
- un agent dispersant pouvant comprendre un polyacrylate d'ammonium ;
- un agent anti-mousse pouvant être un polyoxyethylène stéaryl éther ;
- un agent antibactérien à base de nanoparticules d'argent ;
- un agent antifongique et antibactérien de pyrithione de zinc ;
- une charge à base de talc et de carbonate de calcium ;
- un agent hydro-déperlant comprenant un composé de type polysiloxane ;
- une charge à base de particules microsphériques.

## Description

Le domaine de l'invention est celui des revêtements de surface de tout type, notamment mur, mais également de tout support pouvant être de type meuble ou bien encore objet, que l'on veut chercher à protéger et/ou à décorer. Dans le cas de revêtement mural, on peut être particulièrement intéressé par réaliser des revêtements capables d'assainir des pièces comportant des murs emmagasinant une certaine humidité.

Par ailleurs, alors que l'engouement du public pour des travaux de renouvellement de décoration ne cesse de croître, il convient de plus en plus de trouver des solutions facilitant ce type de travaux pour les utilisateurs et tout particulièrement pour les usagers amateurs. La demanderesse a déjà proposé dans ce domaine, une demande de brevet FR0707965 publiée sous la référence 2923489 concernant un nouveau type de revêtement de décoration caractérisé en ce qu'il comporte au moins une couche de peinture résistante bi-composant et une couche superficielle de résine de protection, ladite résine de protection étant translucide ou transparente. Néanmoins, ce type de revêtement bi-composant nécessite une gestion du temps de pose et de travail calibrée dans la mesure où l'on est contraint par le temps de pose devant être effectué dans un temps imposé par les composants utilisés.

Dans ce contexte, les inventeurs ont mis au point et ont développé une composition pour revêtement particulièrement performante en termes :
- de protection anti-moisissure, anti-humidité, antibactérienne ;
- d'isolation phonique et d'isolation thermique ;
- de temps de pose particulièrement flexible, puisque des essais réalisés ont montré qu'un pot renfermant ladite composition pouvait rester opérationnel même ouvert durant plus de 24 heures, permettant des opérations plus longues de pose et réparties dans le temps.

Il est en effet, devenu de plus en plus intéressant d'élaborer des formulations pour revêtement par exemple mural assurant également un bien-être en termes de conditions d'hygiène et notamment au niveau de l'humidité pouvant être présente dans certains endroits clos, tout autant qu'au niveau de problèmes microbiens.

C'est pourquoi et dans ce contexte, la présente invention a pour objet une composition pour revêtement par exemple mural, comprenant un liant et un solvant aqueux caractérisée en ce que :
- ledit liant est un copolymère d'acétate de vinyle éthylène ;
- ladite composition comprenant également au moins l'ensemble des constituants suivants :
- un agent épaississant naturel à base de cellulose ;
- un agent dispersant pouvant comprendre un polyacrylate d'ammonium ;
- un agent anti-mousse pouvant être un polyoxyethylène stéaryl éther ;
- un agent antibactérien à base de nanoparticules d'argent ;
- un agent antifongique et antibactérien de pyrithione de zinc ;
- une charge à base de talc et de carbonate de calcium ;
- un agent hydro-déperlant comprenant un composé de type polysiloxane ;
- une charge à base de particules microsphériques.

Selon une variante de l'invention, l'agent hydro-déperlant comprend du polydiméthylsiloxane.

Selon une variante de l'invention, l'agent dispersant comprend du polyacrylate d'ammonium et un hexamétaphosphate de sodium.

Selon une variante de l'invention, la composition comprend un agent tensio-actif pouvant être un alcool de Guerbet en C10.

Selon une variante de l'invention, les particules microsphériques sont des microsphères de verre.

Selon une variante de l'invention, la composition comprend un pigment permettant de colorer ledit revêtement à réaliser.

Selon une variante de l'invention, le pigment est du dioxyde de titane.

Selon une variante de l'invention, la composition comprend au moins les constituants avec les pourcentages pondéraux suivants :
- entre 20% et 30% de solvant aqueux ;
- entre 20% et 30% de liant de copolymère d'acétate de vinyle éthylène ;
- entre 0,1% et 1% d'agent épaississant naturel à base de cellulose ;
- entre 0,5% et 3% d'agent dispersant pouvant comprendre un polyacrylate d'ammonium ;
- entre 0,1% et 3% d'agent anti-mousse pouvant être du polyoxyethylène stéaryl éther ;
- entre 0,1% et 2% d'agent antibactérien à base de nanoparticules d'argent ;
- entre 0,1% et 3% d'agent antifongique et antibactérien de pyrithione de zinc ;
- entre 5% et 10% d'agent d'adhésion de type talc ;
- entre 10% et 15% en poids de carbonate de calcium ;
- entre 1% et 5% d'agent hydro-déperlant comprenant un composé de type polysiloxane ;
- entre 8% et 15% de charge à base de particules microsphériques.

Selon une variante de l'invention, la composition comprend les constituants avec les pourcentages pondéraux suivants :
- entre 20% et 30% de solvant aqueux ;
- entre 20% et 30% de liant de copolymère d'acétate de vinyle éthylène ;
- entre 0,1% et 1% d'agent épaississant naturel à base de cellulose ;
- entre 0,5% et 3% d'agent dispersant pouvant comprendre un polyacrylate d'ammonium ;
- entre 0,1% et 3% d'agent anti-mousse pouvant être du polyoxyethylène stéaryl éther ;
- entre 0,1% et 2% d'agent antibactérien à base de nanoparticules d'argent ;
- entre 0,1% et 3% de l'agent antifongique et antibactérien de pyrithione de zinc ;
- entre 5% et 10% d'agent d'adhésion de type talc ;
- entre 10% et 15% en poids de carbonate de calcium ;
- entre 1% et 5% d"agent hydro-déperlant comprenant un composé de type polysiloxane ;
- entre 8% et 15% de charge à base de particules microsphériques ;
- entre 5% et 10% en poids de dioxyde de titane.

Selon une variante de l'invention, la composition comprend également les constituants avec les pourcentages pondéraux suivants :
- entre 0,5% et 2% d'agent dispersant de polyacrylate d'ammonium ;
- entre 0,1 % et 1 % d'hexamétaphosphate de sodium.

L'invention sera mieux comprise à la lecture de la description qui va suivre donnée à titre non limitatif.

Les inventeurs ont conçu un type de composition à enduire permettant d'offrir une réelle protection de surface et particulièrement de murs en permettant également de lutter contre des problèmes de moisissure, d'humidité, de bactéries, toute en assurant également une isolation thermique et phonique, et ce en permettant au support de respirer et grâce à la synergie de différents constituants sélectionnés.

Il est également important de mentionner que l'ensemble des constituants de la composition de l'invention, assure une valeur de COV « Composé Organique Volatil » nul.

La sélection de liants et d'additifs suivants permet l'obtention des performances précitées :
- un liant de type copolymère acétate de vinyle éthylène offre une plastification élevée permettant une application prolongée tout en évitant des craquellements du produit à enduire et en offrant un indice COV nul ;
- un solvant aqueux ;
- un agent antibactérien de type nanoparticules d'argent ;
- un agent antibactérien et antifongique de pyrithione de zinc agissant en synergie avec les nanoparticules d'argent ;
- un agent anti-mousse de type polyéthylène stéaryl éther qui évite ainsi la formation de mousse durant l'application de la composition sur la surface à revêtir ;
- un agent hydro-déperlant de type polysiloxane qui augmente l'étanchéité du support à revêtir, en conservant la microporosité ce qui est rendu nécessaire pour conserver un bon fonctionnement des agents anti-mousse et antibactérien ;
- des tensio-actifs à longues chaines et à haute efficacité pouvant être des alcools de Guerbet en C10 ;
- un pigment donnant de la couleur au revêtement à élaborer, typiquement dans le cas d'une couleur blanche : du dioxyde de titane ;
- des charges de type carbonate de calcium et de talc correspondant à une charge lamellée améliorant la fabrication et l'adhésion sur la surface concernée à revêtir ;
- des agents dispersants permettant d'éviter la floculation des charges et des pigments et faciliter la fabrication, pouvant être du polyacrylate d'ammonium et de l'hexamétaphosphate de sodium ;
- des microsphères de verre permettant d'alléger le produit et permettant d'assurer une anti-condensation et une bonne isolation thermique en diminuant les chocs thermiques entre la température intérieure au revêtement réalisé et sa température en surface.

Des tests d'enduction de la composition de l'invention ont par ailleurs montré une réelle facilité d'application de ladite composition pouvant être déposée avec un platoir ou une taloche.

En effet, la combinaison des constituants présents dans la composition de l'invention permet de disposer d'une composition dont le temps d'évolution pot ouvert est long comparativement à d'autres compositions actuellement mises sur le marché. Actuellement les temps dits de « pot life » sont d'environ 3 heures, correspondant au temps d'utilisation possible, pot ouvert.

Typiquement, un pot renfermant ladite composition de l'invention, resté ouvert durant 24 heures, demeure opérationnel. De plus la composition étalée et travaillée avec un platoir garde ses propriétés d'enduction pendant au moins une demi-heure sans générer d'agrégats au niveau dudit platoir.

La composition permet par ailleurs, une élaboration de revêtement très rapide et très facile d'enduction, étalée sur un mur en couche de 1 à 2 mm, le temps de séchage de la formulation est de moins d'une heure.

En effet, le temps de séchage peut être rendu très court en raison de la création de porosité, alors que l'agent hydro-déperlant permet de ne pas emmagasiner d'humidité dans ladite composition au niveau de la surface à enduire.

Alors qu'il peut être très aisé de réaliser un fin revêtement, typiquement de quelques millimètres d'épaisseur, il est également possible de réaliser un revêtement d'épaisseur plus importante permettant un renfort d'isolation phonique et thermique en raison de la porosité créée par la présence de microsphères. Il est possible d'augmenter l'épaisseur en procédant à des dépôts successifs.

Il est enfin à noter qu'en raison de la stabilité chimique des constituants en présence, la composition de la présente invention permet d'envisager un bon vieillissement des revêtements réalisés.

L'invention a été mentionnée dans le cas de revêtement de type mural, ou plafond mais la présente composition peut tout aussi bien être employée pour recouvrir des surfaces tout aussi variées que des objets de décoration, en adaptant les pigments aux couleurs recherchées, ou bien encore des meubles.

### Exemple de composition selon l'invention :

Les inventeurs fournissent un exemple de composition permettant de réaliser un revêtement mural de couleur blanche, facile de pose, à temps de séchage court, pouvant être aisément réalisé par enduction avec l'aide d'un platoir.

Pour élaborer la composition de la présente invention, les constituants peuvent être introduits progressivement dans une cuve et mélangés avec un agitateur, durant une à deux heures.

Le Tableau ci-après liste l'ensemble des constituants et rappelle leur fonctionnalité.

| **Constituant** | % **pondéral** | **Fonctionnalité** |
|---|---|---|
| Eau | 10-20 | Solvant |
| Hydroxyethyl cellulose | 0,1 - 1 | Epaississant |
| Polyacrylate d'ammonium | 0,5 - 2 | Dispersant de l'ensemble des charge(s) et pigment(s) |
| Polyéthylène stéaryl éther | 0,1 - 3 | Anti-mousse |
| Alcool de Guerbet en C10 | 1 - 2 | Tensio-actif stabilisant |
| Hexamétaphosphate de sodium | 0,1 - 1 | Adoucisseur d'eau et améliore la dispersion |
| Pirythione de zinc | 0,1 - 3 | Antifongique et antibactérien |
| Nano-argent | 0,1 - 2 | Antibactérien |
| Dioxyde de titane | 5 - 10 | Pigment blanc |
| Carbonate de calcium | 10 - 15 | « extender » |
| Talc | 5 - 10 | Améliore l'adhésion |
| Copolymère acétate de vinyle éthylène | 20 - 30 | Liant |
| Polydiméthylsiloxane | 1 - 5 | Hydro-déperlant |
| Microsphères de verre | 8 - 15 | Allège le produit, isolation |

## Revendications

1. Composition pour revêtement par exemple mural, comprenant un liant et un solvant aqueux **caractérisée en ce que** :
- ledit liant est un copolymère d'acétate de vinyle éthylène ;
- ladite composition comprenant également au moins l'ensemble des constituants suivants :
- un agent épaississant naturel à base de cellulose ;
- un agent dispersant pouvant comprendre un polyacrylate d'ammonium ;
- un agent anti-mousse pouvant être un polyoxyethylène stéaryl éther ;
- un agent antibactérien à base de nanoparticules d'argent ;
- un agent antifongique et antibactérien de pyrithione de zinc ;
- une charge à base de talc et de carbonate de calcium ;
- un agent hydro-déperlant comprenant un composé de type polysiloxane ;
- une charge à base de particules microsphériques.

2. Composition pour revêtement selon la revendication 1, **caractérisée en ce que** l'agent hydro-déperlant comprend du polydiméthylsiloxane.

3. Composition pour revêtement selon l'une des revendications 1 ou 2, **caractérisée en ce que** l'agent dispersant comprend du polyacrylate d'ammonium et un hexamétaphosphate de sodium.

4. Composition pour revêtement selon l'une des revendications 1 à 3, **caractérisée en ce qu'**elle comprend un agent tensio-actif pouvant être un alcool de Guerbet en C10.

5. Composition pour revêtement selon l'une des revendications 1 à 4, **caractérisé en ce que** les particules microsphériques sont des microsphères de verre.

6. Composition pour revêtement selon l'une des revendications 1 à 5, **caractérisée en ce qu'**elle comprend un pigment permettant de colorer ledit revêtement à réaliser.

7. Composition pour revêtement selon la revendication 6, **caractérisé en ce que** le pigment est du dioxyde de titane.

8. Composition pour revêtement par exemple mural, selon l'une des revendications 1 à 7, **caractérisée en ce qu'**elle comprend au moins les constituants avec les pourcentages pondéraux suivants :
- entre 20% et 30% de solvant aqueux ;
- entre 20% et 30% de liant de copolymère d'acétate de vinyle éthylène ;
- entre 0,1% et 1% d'agent épaississant naturel à base de cellulose ;
- entre 0,5% et 3% d'agent dispersant pouvant comprendre un polyacrylate d'ammonium ;
- entre 0,1% et 3% d'agent anti-mousse pouvant être du polyoxyethylène stéaryl éther ;
- entre 0,1% et 2% d'agent antibactérien à base de nanoparticules d'argent ;
- entre 0,1% et 3% d'agent antifongique et antibactérien de pyrithione de zinc ;
- entre 5% et 10% d'agent d'adhésion de type talc ;
- entre 10% et 15% en poids de carbonate de calcium ;
- entre 1% et 5% d'agent hydro-déperlant comprenant un composé de type polysiloxane ;
- entre 8% et 15% de charge à base de particules microsphériques.

9. Composition pour revêtement par exemple mural, selon la revendication 8, **caractérisée en ce qu'**elle comprend les constituants avec les pourcentages pondéraux suivants :
- entre 20% et 30% de solvant aqueux ;
- entre 20% et 30% de liant de copolymère d'acétate de vinyle éthylène ;
- entre 0,1% et 1% d'agent épaississant naturel à base de cellulose ;
- entre 0,5% et 3% d'agent dispersant pouvant comprendre un polyacrylate d'ammonium ;
- entre 0,1% et 3% d'agent anti-mousse pouvant être du polyoxyethylène stéaryl éther ;
- entre 0,1% et 2% d'agent antibactérien à base de nanoparticules d'argent ;
- entre 0,1% et 3% de l'agent antifongique et antibactérien de pyrithione de zinc ;
- entre 5% et 10% d'agent d'adhésion de type talc ;
- entre 10% et 15% en poids de carbonate de calcium ;
- entre 1% et 5% d"agent hydro-déperlant comprenant un composé de type polysiloxane ;
- entre 8% et 15% de charge à base de particules microsphériques ;
- entre 5% et 10% en poids de dioxyde de titane.

10. Composition pour revêtement par exemple mural, selon l'une des revendications 8 ou 9, **caractérisée en ce qu'**elle comprend également les constituants avec les pourcentages pondéraux suivants :
- entre 0,5% et 2% d'agent dispersant de polyacrylate d'ammonium ;
- entre 0,1 % et 1 % d'hexamétaphosphate de sodium.
